# EUROPEAN PATENT SPECIFICATION

(11) **EP 2 034 836 B1**
(45) Date of publication and mention of the grant of the patent: **04.11.2009**
(21) Application number: 07810052.6
(22) Date of filing: 29.06.2007
(51) Int. Cl.: A01N 43/40, A01P 13/00

(54) **HIGH-STRENGTH, LOW-TEMPERATURE STABLE HERBICIDAL FORMULATIONS OF FLUROXYPYR ESTERS**
HOCHFESTE UND NIEDRIGTEMPERATURSTABILE HERBIZID-FORMULIERUNGEN AUS FLUORXYPYRESTERN
FORMULATIONS HERBICIDES D'ESTERS DE FLUROXYPYR À RÉSISTANCE ÉLEVÉE, STABLES AUX BASSES TEMPÉRATURES

(30) Priority: 29.06.2006 US 817329 P
(43) Date of publication of application: 18.03.2009
(73) Proprietor: Dow AgroSciences LLC, Indianapolis IN 46268-1054 (US)
(72) Inventor: LINTON, Mark, R., Paraparaumu 6010 (NZ); KEENEY, Franklin, N., Carmel IN 46033 (US)
(74) Representative: Böhm, Brigitte
(86) International application number: PCT/US2007/015165
(87) International publication number: WO 2008/005350

(56) References cited:
- WO-A-94/24866

## Description

The present invention relates to herbicidal formulations of fluroxypyr esters. More particularly, the present invention concerns high-strength formulations of fluroxypyr ester that remain liquid at lower temperatures.

Fluroxypyr is a known, effective herbicide. Fluroxypyr meptyl ester, which is sold commercially as Starane^{™} herbicide (a trademark of Dow AgroSciences LLC), is typically formulated as emulsifiable concentrates at a concentration of 200 grams acid equivalent per liter (gae/L) in aromatic hydrocarbon solvents. A high-strength formulation is desirable for a variety of economic and environmental reasons. For example, it is desirable to provide a high-strength formulation to reduce shipping and handling costs, to reduce the amount of packaging material that must be disposed and to reduce the amount of solvent released into the environment. A high-strength formulation should be stable and retain potency during storage and shipping. Furthermore, a high-strength formulation should be a clear, homogeneous liquid that is stable at ambient temperatures and should not exhibit any precipitation at lower temperatures.

A major limitation of the aromatic hydrocarbon based emulsifiable concentrate of fluroxypyr meptyl ester is its limited stability at low temperature and high concentration. While higher concentration emulsifiable concentrate formulations can be prepared using chlorinated solvents or 1-methyl-2-pyrrolidinone, these solvents have less than preferred environmental profiles. The present invention addresses these needs and provides a wide variety of benefits and advantages.

Surprisingly, it has now been found that a low-temperature stable, high-strength emulsifiable concentrate of fluroxypyr esters can be prepared by using an *N,N*-dimethyl alkylamide as the solvent. Through extensive field testing the new invention has been found to be biologically equivalent to the existing Starane formulations based upon a petroleum hydrocarbon solvent over a broad spectrum of broadleaf weeds.

The present invention provides a high-strength herbicidal formulation comprising a mixture of a fluroxypyr ester, a surfactant or mixture of surfactants and an *N,N*-dimethyl (C₆-C₁₂)alkylamide as a solvent wherein the formulation contains from about 340 grams per liter (g/L) to about 600 g/L of fluroxypyr ester, from about 100 g/L to about 200 g/L of surfactant and from about 300 g/L to about 560 g/L of *N,N*-dimethyl (C₆-C₁₂)alkylamide as a solvent.

In general the present invention is directed to high-strength herbicidal formulations containing fluroxypyr esters, in particular fluroxypyr meptyl ester. The herbicidal formulation includes the fluroxypyr ester in an amount sufficient to provide the high-strength formulation with no crystallization at temperatures as low as 0°C. The high-strength herbicidal formulation includes at least about 300 gae/L to about 350 gae/L based upon the fluroxypyr acid equivalent of the fluroxypyr ester. This typically corresponds to about 430 g/L to about 505 g/L of the fluroxypyr meptyl ester.

Other esters of fluroxypyr may be suitable for this invention such as, but not limited to, 2-butoxy-1-methylethyl, 2-butoxyethyl, butyl, 2-methylpropyl, 2-ethylhexyl and 1-decyl esters.

The surfactants can be anionic, cationic or nonionic in character. Surfactants conventionally used in the art of formulation and which may also be used in the present formulations are described, *inter alia,* in "McCutcheon's Detergents and Emulsifiers Annual", MC Publishing Corp., Ridgewood, New Jersey, 1998 and in "Encyclopedia of Surfactants", Vol. I-III, Chemical publishing Co., New York, 1980-81. Typical surfactants include salts of alkyl sulfates, such as diethanolammonium lauryl sulfate; alkylarylsulfonate salts, such as calcium dodecylbenzenesulfonate; alkyl and/or arylalkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; and mixtures thereof. The surfactant or mixture of surfactants is usually present at a concentration of from about 100 g/L to about 200 g/L.

The solvent, which typically makes up the remainder of the high-strength herbicidal formulation, is an *N,N*-dimethyl (C₆-C₁₂)alkylamide. *N,N*-Dimethyl (C₆-C₁₂)alkylamides are commercially available under various tradenames including, for example, Agnique KE 3658 and 3308 (Cognis Inc.) or Genagen 4166 and 4296 (Clarian GmbH), and are often supplied as mixtures such as *N,N-*dimethyloctanamide/decanamide. The solvent is usually present at a concentration from about 300 g/L to about 560 g/l, more preferably from about 350 g/L to about 450 g/L.

The high-strength, herbicidal formulation does not exhibit separation or precipitation (or crystallization) of any of the components at low temperatures. For example, the high-strength formulation remains a clear solution at temperatures below about 10°C, more preferably at temperatures about 0°C.

In addition to the formulations set forth above, the present invention also embraces the compositions of these fluroxypyr ester formulations in combination with one or more additional compatible ingredients. Other additional ingredients may include, for example, one or more other herbicides, dyes, and any other additional ingredients providing functional utility, such as, for example, stabilizers, fragrants, viscosity-lowering additives, and freeze-point depressants.

Additional herbicidal compounds employed as supplements or additives should not be antagonistic to the activity of the fluroxypyr ester composition as employed in the present invention. Suitable herbicidal compounds include, but are not limited to 2,4-D, 2,4-MCPA, ametryn, aminopyralid, asulam, atrazine, butafenacil, carfentrazone-ethyl, chlorflurenol, chlormequat, chlorpropham, chlorsulfuron, chlortoluron, cinosulfuron, clethodim, clopyralid, cyclosulfamuron, pyroxsulam, dicamba, dichlobenil, dichlorprop-P, diclosulam, diflufenican, diflufenzopyr, diuron, glyphosate, hexazinone, imazamox, imazapic, imazapyr, imazaquin, imazethapyr, imazosulfuron, MCPA, metsulfuron-methyl, picloram, pyrithiobac-sodium, sethoxydim, sulfometuron, sulfosate, sulfosulfuron, tebuthiuron, terbacil, thiazopyr, thifensulfuron, triasulfuron, tribenuron and triclopyr. The herbicidal formulations of the present invention can be coformulated with the other herbicide or herbicides, tank mixed with the other herbicide or herbicides, or applied sequentially with the other herbicide or herbicides.

Dyes may be used in the formulated composition as a marker. Generally, a preferred dye can be any oil-soluble dye selected from EPA's approved list of inerts exempt from tolerance. Such dyes may include, for example, D&C Red #17, D&C Violet #2, and D&C Green #6. Dyes are generally added to the composition by adding the desired amount of dye to the formulated composition with agitation. Dyes are generally present in the final formulation composition in a concentration of about 0.1-1.0% by weight.

The compositions of the present invention are diluted with water prior to being applied. The diluted compositions usually applied to cereals and range and pastures generally contain about 0.0001 to about 5.0 weight percent the fluroxypyr ester.

### Example 1: Preparation of High-Strength Fluroxypyr Meptyl Ester Formulation

A high-strength formulation was prepared containing 333 gae/L of fluroxypyr meptyl ester by dissolving 480 g/L technical fluroxypyr meptyl ester with stirring into 404 g/L Genagen 4166 (Clarian GmbH; mixture of *N,N-*dimethyloctanamideldecanamide), 13 g/L Soprophor FLK (Rhodia Inc; polyethylene tristyrylphenol phosphate, potassium salt), 78.5 g/L Tensiofix N9811 HF (OmniChem nv; proprietary anionic-nonionic blend) and 78.6 g/L ethoxylated tristyrylphenol at room temperature.

Unlike the commercial formulation based on aromatic hydrocarbon solvents, which required packaging material with high barrier properties, e.g., fluorinated HDPE or metal or metal lined containers, to prevent migration through the packaging material, this formulation can be packaged in standard HDPE containers. In addition, seals and O-rings are much less sensitive to the new formulation compared to the commercial formulation based on aromatic hydrocarbon solvents.

### Example 2: Low Temperature Storage Stability of High-Strength Fluroxypyr Meptyl Ester Formulations

The formulation of Example 1 was cooled and the crystallization point was determined to be less than -1°C. A seeded sample of the formulation did not crystallize at -5°C after 2-3 weeks, but did form a small amount of crystals after 3-4 months at -9:9°C. The crystals that did form went back into solution upon warming to room temperature with gentle agitation.

## Claims

1. A high-strength, low-temperature stable herbicidal formulation comprising a mixture of a fluroxypyr ester, a surfactant or mixture of surfactants, and an *N,N*-dimethyl (C₆-C₁₂)alkylamide as a solvent wherein the formulation contains from about 430 grams per liter (g/L) to about 600 g/L of the fluroxypyr ester, from about 100 g/L to about 200 g/L of surfactant and from about 300 g/L to about 560 g/L of *N,N*-dimethyl (C₆-C₁₂)alkylamide as a solvent.

2. A formulation of Claim 1 in which the fluroxypyr ester is fluroxypyr meptyl ester.

3. A formulation of Claim 1 in which the *N,N-*dimethyl (C₆-C₁₂)alkylamide is a mixture of *N,N*-dimelhyloctanamide/decanamide.

## Patentansprüche

1. Hochkonzentrierte, bei niedriger Temperatur stabile Herbizid-Formulierung, umfassend eine Mischung eines Fluroxypyr-Esters, ein Tensid oder eine Mischung eines Tensids und ein *N,N*-Dimethyl(C₆-C₁₂)alkylamid als ein Lösungsmittel, worin die Formulierug etwa 430 Gramm pro Liter (g/L) bis etwa 600 g/L des Fluroxypyr-Esters, etwa 100 g/L bis etwa 200 g/L Tensid und etwa 300 g/L bis etwa 560 g/L *N,N*-Dimethyl(C₆-C₁₂)alkylamid als ein Lösungsmittel enthält.

2. Formulierung nach Anspruch 1, worin der Fluroxypyr-Ester Fluroxypyr-Meptyl-Ester ist.

3. Formulierung nach Anspruch 1, worin das *N,N*-Dimethyl(C₆-C₁₂)alkylamid eine Mischung aus *N,N-*Dimethyloktanamid/dekanamid ist.

## Revendications

1. Formulation d'herbicide fortement concentrée, stable à basse température, comprenant un mélange d'un ester de fluroxypyr, d'un tensioactif ou d'un mélange de tensioactifs, et d'un N,N-diméthyl-(alcane en C₆₋₁₂)-amide servant de solvant, laquelle formulation contient d'environ 430 g/L (grammes par litre) à environ 600 g/L de l'ester de fluroxypyr, d'environ 100 g/L à environ 200 g/L de tensioactif(s), et d'environ 300 g/L à environ 560 g/L du N,N-diméthyl-(alcane en C₆₋₁₂)-amide servant de solvant.

2. Formulation conforme à la revendication 1, dans laquelle l'ester de fluroxypyr est de l'ester de 1-méthyl-heptyle de fluroxypyr.

3. Formulation conforme à la revendication 1, dans laquelle le N,N-diméthyl-(alcane en C₆-₁₂)-amide est un mélange de N,N-diméthyloctanamide et de N,N-diméthyl-décanamide.
